# EUROPEAN PATENT SPECIFICATION

(11) **EP 3 797 327 B1**
(45) Date of publication and mention of the grant of the patent: **30.08.2023**
(21) Application number: 18745843.5
(22) Date of filing: 11.07.2018
(51) Int. Cl.: G02B 23/08, G03B 17/17, H04M 1/02, G02B 27/01, G03B 35/08, G02B 27/10, G03B 17/56, G02B 15/10, G02B 27/14, G02B 17/02

(54) **A DETACHABLE OPTICAL STRUCTURE FOR DISPLACING THE OPTICAL AXIS OF A CAMERA DEVICE**
ABNEHMBARE OPTISCHE STRUKTUR ZUR VERSCHIEBUNG DER OPTISCHEN ACHSE EINER KAMERAVORRICHTUNG
STRUCTURE OPTIQUE AMOVIBLE DESTINÉE À DÉPLACER L'AXE OPTIQUE D'UN DISPOSITIF D'APPAREIL DE PRISE DE VUES

(43) Date of publication of application: 31.03.2021
(73) Proprietor: HUAWEI TECHNOLOGIES CO., LTD., Shenzhen, Guangdong 518129 (CN)
(72) Inventor: EROMAKI, Marko, 16440 Kista (SE)
(74) Representative: Körber, Martin Hans
(86) International application number: PCT/EP2018/068810
(87) International publication number: WO 2020/011349

(56) References cited:
- US-A1- 2007 116 454
- US-A1- 2010 328 420
- US-A1- 2013 155 479
- US-A1- 2013 250 410
- US-B1- 8 639 106
- US-B1- 9 060 108

## Description

### TECHNICAL FIELD

The disclosure relates to the field of optics, and more particularly to detachable optical structures for devices with digital cameras.

### BACKGROUND

Various electronic devices may incorporate one or more digital cameras comprising an image sensor for capturing still images and/or videos. The arrangement and adjustability of the location of these cameras may be limited by the space available in the device and its original layout. In particular, with portable devices that have two or more cameras, the distance between the cameras is often minimized on purpose for improved image quality or to provide different image capture modes. The minimized distance allows only a limited change of perspective between the cameras. If the cameras are located at a distance from each other sufficient to create two or more perspectives, this may in turn limit the quality of digital images captured. Camera position adjustment mechanisms in a portable device can be cumbersome and require additional arrangements in an already narrow space available in a portable device. Prior art optical structures are disclosed in US9060108 B1, US 2013/250410 A1, US2007/116454 A1, US2010/328420 A1, US8639106 B1, and US2013/155479 A1.

### SUMMARY

This summary is provided to introduce a selection of concepts in a simplified form that are further described below in the detailed description. This summary is not intended to identify key features or essential features of the claimed subject matter, nor is it intended to be used to limit the scope of the claimed subject matter.

It is an object to provide an improved optical structure. The object is achieved by the features of independent claim 1.

Preferred embodiments are defined in the dependent claims.

In accordance with a first aspect of the claimed subject matter, a detachable optical structure for a device having one or more cameras is provided. The detachable optical structure comprises: a body having a transparent portion, and an optical element attached to the body. The optical element comprises a first aperture, a second aperture and two or more reflective elements arranged for parallel displacement of an optical axis from the first aperture to the second aperture, and when the detachable optical structure is applied to the device having one or more cameras, the optical element is configured to be positioned such that the first aperture is aligned with a camera of the device having one or more cameras, and the optical element is at least partially aligned with the transparent portion of the body. Therefore, the detachable optical structure can be used to displace the optical axis of a camera on a device, and for example change the role of this camera. For instance, if the device has two or more cameras, the detachable optical structure can be used to change distance between optical axes of adjacent cameras. This can provide an ability to capture stereoscopic images, assist in estimation of distance to objects due to increased distance between points of measurement, or contribute to three-dimensional mapping of objects. If the device has only one camera, the optical structure can be used to change the optical axis of the camera, for example if a cover with a transparent area which is not aligned with the camera is applied to the device. Alternatively, in a device with one camera the optical structure can be used to project separate images onto one image sensor from different perspectives.

The body has one or more transparent portions, these portions may comprise transparent material, for example plastic or glass. The optical element may be attached to the body rigidly or be in a moving connection. Parallel displacement of an optical axis refers to a change in the location of the optical axis of a camera on the device. Alignment of the apertures of the optical element with a camera and with the transparent portion of the body refers to an alignment sufficient to allow light to travel through the transparent portion, through the second aperture, via the optical element through the first aperture, and then strike on for example an image sensor of a camera.

The terms "first aperture" and "second aperture" are used in this description for illustration purposes only, and can be interchanged or renumbered without affecting the scope. The term "detachable" refers to an ability to detach, for example the optical structure may be configured to be repeatedly applied to, and detached from, the device having one or more cameras.

In an implementation form of the first aspect, the first aperture and the second aperture of the optical element are parallel to each other and brought apart in space. The two or more reflective elements are aligned with each other and with the first aperture and the second aperture such that light traveling through the second aperture reflects off the two or more reflective elements and travels through the first aperture. The reflective elements can be made of, or coated in, any material that reflects light when positioned at an angle appropriate for the operation of the detachable optical structure. Therefore, the parallel optical axis displacement can be provided in an arrangement of the apertures and reflective elements that may not require complex mechanical arrangements and can be cost-efficient.

In a further implementation form of the first aspect, the first aperture and the second aperture are parallel to each other and brought apart in space by a distance between 30 and 80 millimetres, allowing parallel displacement of the optical axis from the first aperture to the second aperture by the distance between 30 and 80 mm. Therefore, for example if the device has two or more cameras, the parallel displacement of the optical axis can create a distance between optical axes of two adjacent cameras similar or equal to the distance between pupils of human eyes.

In other implementations, the distance between the first and second apertures may be outside of this range and limited for example by the physical dimensions of the device. A longer distance between the apertures may provide improved quality of distance measurement and/or three-dimensional mapping.

In a further implementation form of the first aspect, the optical element has a telescopic structure, and the first aperture, the second aperture and the two or more reflective elements are arranged to be movable in relation to each other such that the length of the parallel displacement of the optical axis from the first aperture to the second aperture can be adjusted. The optical element may also be movably attached to the body of the optical structure to allow this free movement of apertures and reflective elements in relation to each other in any position of the device. The reflective elements may be grouped with the respective apertures and move in relation to the other group. The movable arrangement allows fine-tuning the length of the parallel displacement for the needed purpose, and may therefore add a variety of uses for the optical element.

In a further implementation form of the first aspect, the reflective elements have a convex or concave shape. The convex or concave shape can provide improved bundling of light rays that travel through the optical element, and therefore prevent image distortion that may be caused by moving the reflective elements and apertures in relation to each other.

In accordance with the claimed subject matter, the optical element is movably attached to the body via a shifting mechanism. Therefore, the position of the optical element can be made adjustable when the detachable optical structure is detached from, or applied to, the device having one or more cameras.

In accordance with a first alternative of the claimed subject matter, the shifting mechanism comprises a rotating disc attached to the body via a pivoting joint, two or more arms attached to the rotating disc via two or more sliding joints, and two or more pivoted joints connecting each of the two or more arms with the optical element. The shifting mechanism according to this implementation form can provide free movement of the optical element along the surface of the body in two directions, while preventing the optical element from unwanted rotation or tilt.

In accordance with a second alternative of the claimed subject matter, the shifting mechanism comprises a plurality of mechanical arms attached to each other in a sequence at each end via floating pivots, wherein the first mechanical arm of the plurality of mechanical arms is attached at a first end to the body via an anchored pivot, and the last mechanical arm of the plurality of mechanical arms is attached to the optical element via a floating pivot. The plurality of mechanical arms attached to each other in a sequence comprises two or more mechanical arms. The shifting mechanism can provide free movement of the optical element along the body.

In accordance with a third alternative of the claimed subject matter, the shifting mechanism comprises a ferritic plate rigidly attached to the body, a magnetic element rigidly attached to the optical element and movably attached to the ferritic plate due to the magnetic attraction between the magnetic element and ferritic plate. Therefore, the optical element can be movable when the optical structure is detached from the device, and secured when the optical structure is applied to the device. The magnetic element can be attracted to the ferritic plate and secured to it when attached, however remain easily detachable and therefore movable.

In a further implementation form of the first aspect, the shifting mechanism is an automated actuator attached to the body of the detachable optical structure and the optical element. Therefore, the optical element can be moved automatically in relation to the body.

In a further implementation form of the first aspect, the detachable optical structure comprises a movement area within which the optical element is configured to be movable, wherein the at least one transparent portion of the body covers the whole movement area. Therefore, the optical element can be moved along the transparent portion of the body, and prevented from moving into non-transparent portions.

In a further implementation form of the first aspect, the optical element is rigidly attached to the transparent portion of the body of the detachable optical structure. The detachable optical structure may be designed in a way that the position of the optical element on the body remains permanent and aligns with a camera of one or more specific device types when the optical structure is applied to such device. Thereby alignment errors caused by accidental movement of the optical element can be avoided.

In a further implementation form of the first aspect, the optical element comprises a third aperture and three or more reflective elements, arranged to split the optical element into two sections, wherein each section is arranged for separate parallel displacements of the optical axes from the first aperture to the second aperture, and from the first aperture to the third aperture. Therefore, the optical element can be split into two sections and project two separated images onto one image sensor of a camera from different perspectives. This can be used for example in stereoscopic imaging or any other function that requires separation of optical axes of multiple cameras in a device with a single camera.

In a further implementation form of the first aspect, the optical element comprises one or more lenses positioned between the reflective elements. With additional lenses, the light rays passing through the optical elements can remain bundled regardless of its dimensions or changing size in case of a telescopic structure.

According to a second aspect, an electronic imaging device comprises two or more cameras and the detachable optical structure according to any one of the implementations of the first aspect. The detachable optical structure can provide parallel displacement of the optical axis of one or all of the cameras of the electronic imaging device, which allows adjusting the distance between optical axes of adjacent cameras.

According to a third aspect, a mobile phone comprises one or more cameras and the detachable optical structure according to any one of the implementations of the first aspect. The detachable optical structure may be part of the mobile phone casing, cover or a separate structure detachable from any of the abovementioned components.

According to a fourth aspect, a cover for a device having one or more cameras comprises the detachable optical structure according to any one of the implementations of the first aspect. The cover may provide protective functions in addition to parallel displacement of optical axes of a camera. The cover can be a detachable cover.

According to a fifth aspect, a virtual and/or augmented reality headset comprises the detachable optical structure according to any one of the implementations of the first aspect. Virtual and/or augmented reality headsets can be configured to project stereoscopic images to a user, and the detachable optical structure may be used to capture stereoscopic images when applied to a device with one or more cameras.

In an implementation of the fifth aspect, the virtual and/or augmented reality headset comprises a slot for a mobile device having two or more cameras, wherein the detachable optical structure is aligned with the slot such that, when the mobile device having two or more cameras is inserted in the slot, the optical element is aligned with one of the cameras of the mobile device having two or more cameras.

According to a sixth aspect, a detachable cover for a virtual and/or augmented reality headset comprises the detachable optical structure according to any one of the implementations of the first aspect.

Many of the attendant features will be more readily appreciated as they become better understood by reference to the following detailed description considered in connection with the accompanying drawings.

### DESCRIPTION OF THE DRAWINGS

The present description will be better understood from the following detailed description read in light of the accompanying drawings, wherein:
FIG. 1 illustrates a schematic side view of a detachable optical structure applied to a device according to an embodiment;
FIG. 2 illustrates a schematic side view of an isolated optical element according to an embodiment;
FIG. 3 is a schematic illustration of the direction of light traveling through the optical element according to an embodiment;
FIG. 4 illustrates a schematic side view of a telescopic optical element according to an embodiment;
FIG. 5 illustrates a schematic side view of a split optical element according to an embodiment;
FIG. 6a illustrates a schematic top view of an optical structure applied to a device according to an embodiment;
FIG. 6b illustrates a schematic top view of an optical structure applied to a device with optical element aligned according to an embodiment;
FIG. 6c illustrates a schematic top view of an optical structure applied to a device with cameras in a corner area according to an embodiment;
FIG. 7a illustrates a schematic top view of an optical structure comprising mechanical arms applied to a device according to an embodiment;
FIG. 7b illustrates a schematic top view of an optical structure applied to a device with optical element aligned according to an embodiment;
FIG. 8a illustrates a schematic top view of an optical structure comprising magnetic element applied to a device according to an embodiment;
FIG. 8b illustrates a schematic top view of an optical structure applied to a device with optical element aligned according to an embodiment;
FIG. 9a illustrates a schematic top view of an optical structure with fixed optical element according to an embodiment;
FIG. 9b illustrates a schematic top view of an optical structure applied to a device according to an embodiment;
FIG. 10a illustrates a schematic view of a headset comprising the optical structure, according to an embodiment;
FIG. 10b illustrates a schematic view of the headset from a different angle.

Like references are used to designate like parts in the accompanying drawings.

### DETAILED DESCRIPTION

The detailed description provided below in connection with the appended drawings is intended as a description of the embodiments and is not intended to represent the only forms in which the embodiment may be constructed or utilized. However, the same or equivalent functions and structures may be accomplished by different embodiments.

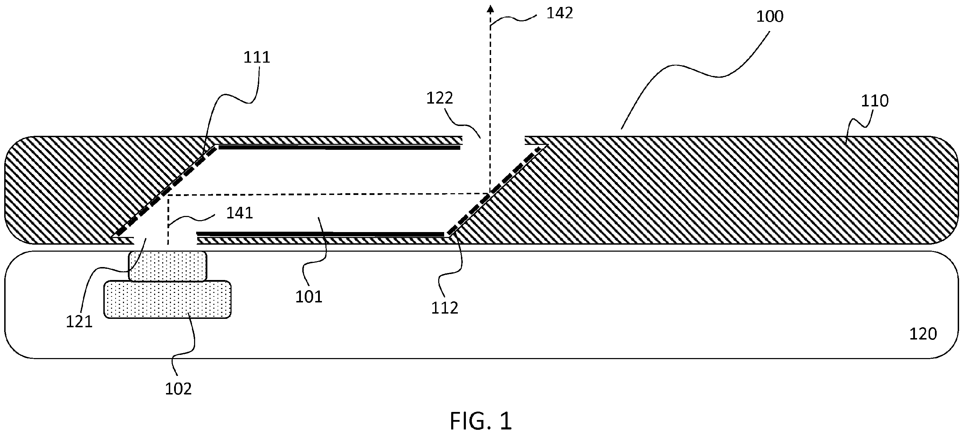

FIG. 1 is a schematic side view of a detachable optical structure 100 according to an embodiment. The detachable optical structure 100 can be a structure that can be repeatedly detached from, and applied to, a device 120 comprising a camera 102. According to an embodiment, the device 120 may have more than one camera 102. One camera 102 is illustrated for clarity and brevity in FIG. 1. According to embodiments, the device 120 comprising one or more cameras may be selected from, but not limited to: an electronic imaging device, a mobile phone or any other portable electronic device, a virtual and/or augmented reality headset. The optical structure 100 may be part of a protective cover, virtual and/ or augmented reality headset, or any other suitable detachable component, or it may be a standalone element.

The optical structure 100 comprises a body 110 having a transparent portion, and an optical element 101 attached to the body 110. Illustration of the transparent portion is omitted from the side view of FIG. 1 and will be apparent in further drawings. The optical element 101 comprises a first aperture 121, a second aperture 122 and two or more reflective elements 111, 112. The apertures 121, 122 and reflective elements 111, 112 are arranged for parallel displacement of an optical axis 141, 142 from the first aperture 121 to the second aperture 122. The reflective elements may be mirrors, lenses or any other elements configured to reflect light waves of a predetermined range of wavelengths. The reflective elements 111, 112 may be coated with a reflective coating. Reflective surface of the reflective elements 111, 112 may also have refractive properties.

The first and second apertures 121, 122 are shown as blank spaces in FIG.1, however this is done for illustration purposes only. According to an embodiment, the body 110 has a transparent portion in the regions of apertures 121, 122, and the apertures may only be in the optical element 101. Apertures 121, 122 may be cut out in the optical element 101, covered with a protective cover, a lens, a filter made of any suitable transparent or partially transparent material.

The arrow 141, 142 illustrates the optical axis of the optical element 101 which is displaced from position 141 to position 142. When the detachable optical structure 100 is applied to the device 120, as shown on FIG. 1, the optical element 101 is positioned such that the first aperture 121 is aligned with the camera 102. This provides parallel displacement of the optical axis of the camera 102. The transparent portion of the body 110 is configured to cover to be at least partially aligned with the optical element 101 to allow for light to travel through the second aperture 122.

According to an embodiment, the first aperture 121 and the second aperture 122 of the optical element 101 are parallel to each other and brought apart in space. The reflective elements 111 and 112 are aligned with each other and with the apertures 121, 122 such that light traveling through the second aperture 122 reflects off the reflective elements 112, then 111, and travels through the first aperture 121. The distance between the first and second apertures 121, 122 determines the length of parallel displacement of the optical axis 141, 142. Creating a distance between the apertures 121, 122 and thereby a parallel displacement may be desirable for example in distance measurement, three-dimensional mapping of objects, or stereoscopic imaging.

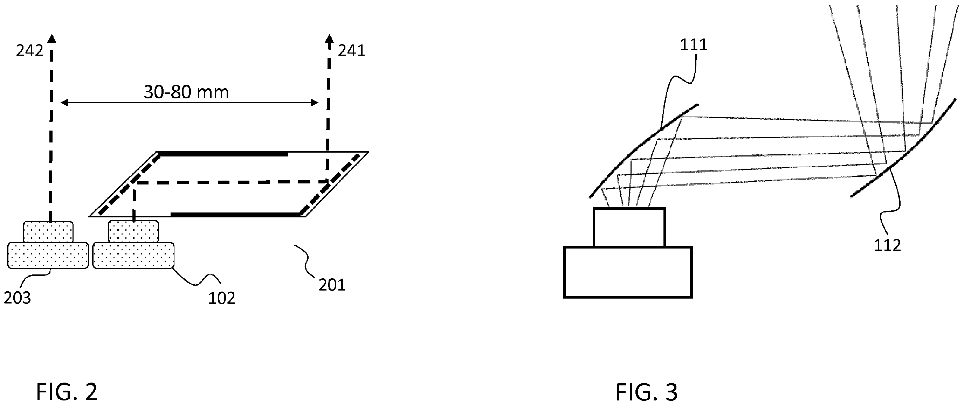

According to an embodiment, the parallel apertures 121, 122 are brought apart in space by a distance between 30 and 80 millimeters, allowing parallel displacement of the optical axis from the first aperture 121 to the second aperture 122 by the distance between 30 and 80 millimeters. According to an embodiment, the device 120 comprises two or more cameras 102, 203 as shown on FIG. 2, and in this embodiment the parallel displacement of the optical axis by 30-80 millimeters can create a distance between optical axes 241, 242 of two adjacent cameras 102, 203 that is similar or equal to the distance between pupils of human eyes. FIG. 2 schematically shows the optical element 201 and cameras 102, 203 isolated from the optical structure and the device. In this embodiment, the function of the original dual-camera arrangement can be changed from a single-perspective arrangement for capturing two-dimensional stills and video into a stereoscopic multi-perspective camera for capturing stereoscopic images. These images can be used for example in headsets comprising a display to create an illusion of depth for the viewer.

In other embodiments, the distance between the first and second apertures 121, 122 may be outside of the range 30-80 mm and limited for example by the physical dimensions of the device. A longer distance between the apertures may provide improved quality of distance measurement and/or three-dimensional mapping.

FIG. 3 is a schematic illustration showing the direction of the light beams traveling through the optical element 101, 201 according to an embodiment. This graph shows an example layout of reflective elements 111, 112 in an optical element 101, 201 as shown in FIGs. 1-2. The reflective elements 111, 112 may have a curved shape or be flat depending on the structure and size of the optical element 101, 201.

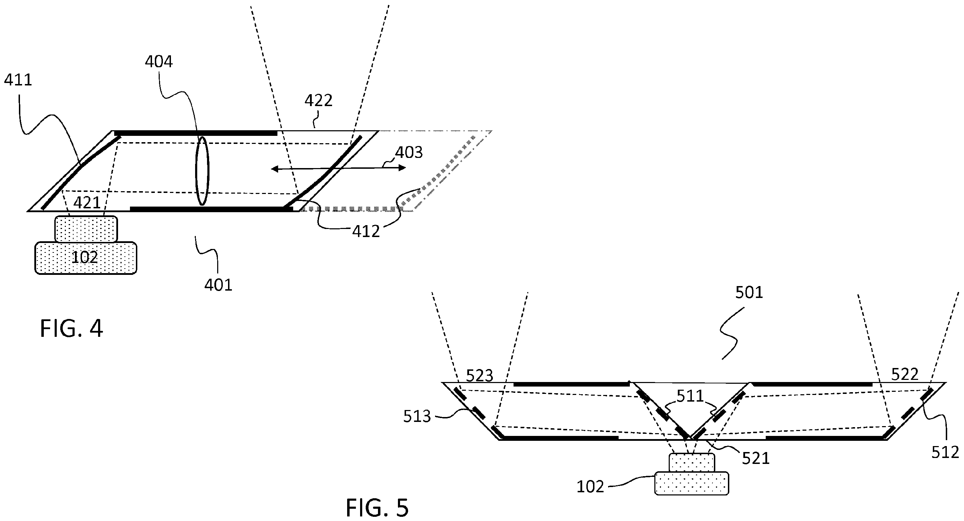

FIG. 4 is a schematic side view of the optical element 401 isolated from the optical structure according to an embodiment. The optical element 401 in this embodiment has a telescopic structure, wherein the first aperture 421, the second aperture 422 and the two or more reflective elements 411, 412 are arranged to be movable in relation to each other so that the length of the parallel displacement of the optical axis from the first aperture 421 to the second aperture 422 can be adjusted. In an example embodiment of FIG. 4, the arrow 403 shows the directions of telescopic movement. The dashed lines in the optical element 401 show possible direction of light rays traveling through it, and the dotted lines illustrate the reflective element 412 and the rest of the telescopic optical element 401 in an unfolded position.

According to an embodiment, the reflective elements 411, 412 have a convex or concave shape which can provide improved bundling of light rays that travel through the optical element. This in turn prevents image distortion that may be caused by moving the reflective elements 411, 412 and apertures 421, 422 in relation to each other. In an embodiment, the bundling is also improved by means of an additional lens 404 positioned between the reflective elements, as illustrated on FIG. 4.

According to an embodiment illustrated on FIG. 5, the optical element 501 can comprise three apertures 521, 522, 523 and three or more reflective elements 511, 512, 513, arranged to split the optical element 501 into two sections, wherein each section is arranged for separate parallel displacements of the optical axes from the first aperture 521 to the second aperture 522, and from the first aperture 521 to the third aperture 523. In this embodiment, two separated images can be projected onto one image sensor of a camera 102 from different perspectives. This can be used for example in stereoscopic imaging or any other function that would normally require multiple cameras on a device comprising a single camera 102.

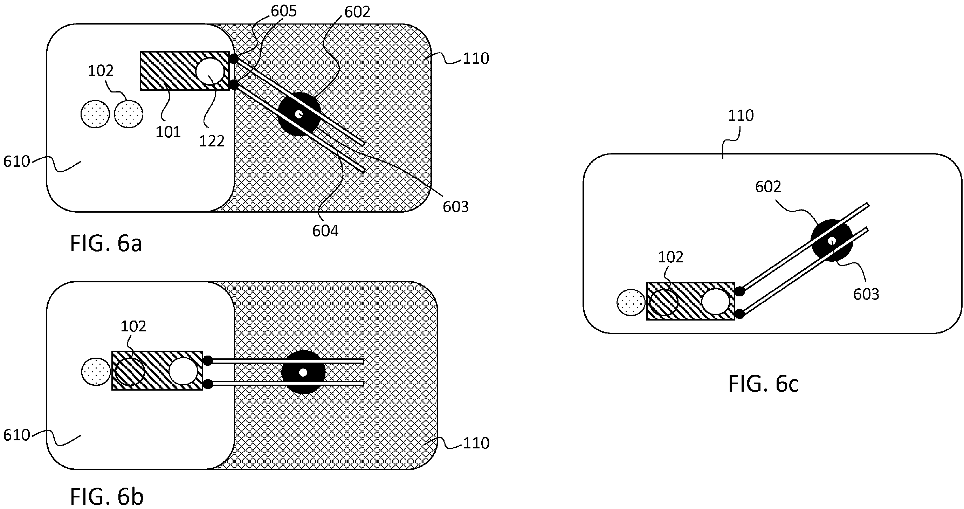

According to embodiments, the optical element is movably attached to the body via a shifting mechanism. The shifting mechanism may be selected from a variety of mechanisms that provide a moving connection, some of which are illustrated in FIGs. 6a-8b. These drawings show a device shaped as a mobile device with one or more cameras, and the optical structure as a cover for this mobile device. This is done for illustration purposes only, and similar embodiments for other types of devices and optical structures are within the scope of this application. For simplicity, like elements such as an optical element 101 or a body 110 of the optical structure are denoted with the same references as in FIG. 1.

FIGs. 6a-6c schematically illustrate an embodiment wherein the shifting mechanism comprises a rotating disc 602 attached to the body 110 via a pivoting joint 603, two or more 604 arms attached to the rotating disc via two or more sliding joints, and two or more pivoted joints 605 connecting each of the two or more arms 604 with the optical element 101. FIGs. 6a and 6b show the body 110 of the optical structure having a transparent portion 610 aligned with the optical element 101. FIG. 6a illustrates the optical element 101 being out of alignment with the camera 102, while on FIG. 6b the optical element 101 is aligned with the camera 102 so that the optical axis of the camera 102 is displaced to the second aperture 122 of the optical element 101.

According to an embodiment, a movement area within which the optical element 101 is configured to be movable is covered by the transparent portion 610 of the body 110. In the embodiments shown in FIGs. 6a-6c, the optical element 101 can be moved between along the body 110 horizontally without tilt or unwanted rotation due to the structure of the shifting mechanism.

The optical structure is applied to devices with two cameras in FIGs. 6a-6c. FIG. 6c illustrates an example wherein the cameras are positioned in a corner area of the device, while the transparent and non-transparent portions of the body 110 are omitted from this figure. This demonstrates that the shifting mechanism allows to move the optical element along the body 110 to be aligned with cameras in any suitable part of the device. In an embodiment, the same optical structure may be used with several different devices.

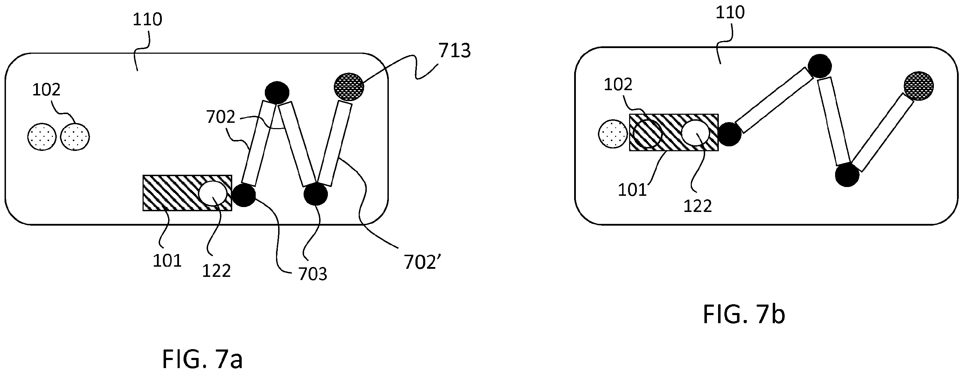

FIGs. 7a-7b illustrate an example embodiment of the optical structure applied to a device with two cameras, wherein the shifting mechanism comprises a plurality of mechanical arms 702 attached to each other in a sequence at each end via floating pivots 703. The first mechanical arm 702' of the plurality of mechanical arms 702 is attached at a first end to the body 110 via an anchored pivot 713, and the last mechanical arm of the plurality of mechanical arms 702 is attached to the optical element 101 via a floating pivot 703. This shifting mechanism provides freedom of movement of the optical element 101 along the body 110 of the optical structure. FIG. 7a illustrates the optical element 101 being out of alignment with the camera 102, while on FIG. 7b the optical element 101 is aligned with the camera 102.

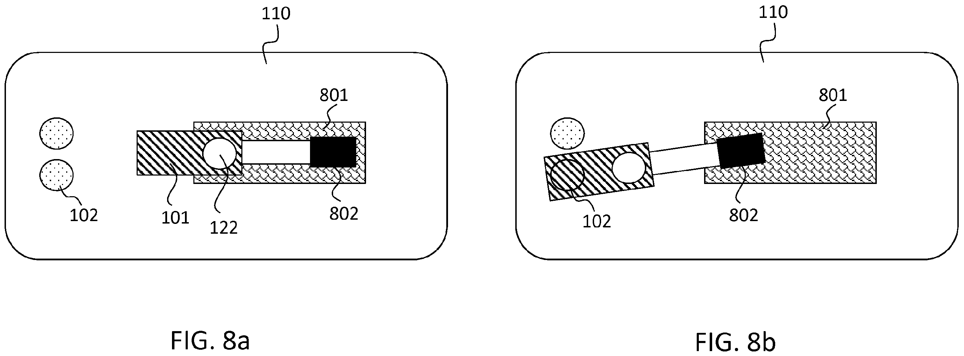

FIGs. 8a-8b illustrate an example embodiment of the optical structure 101 applied to a device with two cameras, wherein the optical element 101 is out of alignment with the camera 102 on FIG. 8a and aligned with the camera 102 on FIG. 8b. In this embodiment, the shifting mechanism comprises a ferritic plate 801 rigidly attached to the body 110, a magnetic element 802 rigidly attached to the optical element 101 and movably attached to the ferritic plate 801 due to the magnetic attraction between the magnetic element 802 and ferritic plate 801.

Magnetic retention allows manual shifting of the optical element 101 and can hold it in place with sufficient force after the adjustment. This also allows rotational movement for the optical element 101, as shown in FIG. 8b.

According to an embodiment not illustrated in the drawings, the shifting mechanism can be an automated actuator attached to the body and the optical element. In this embodiment, the optical element can be moved automatically in relation to the body.

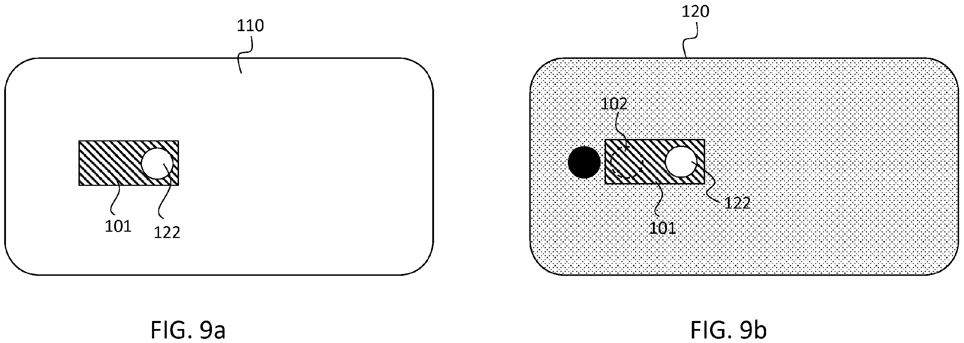

According to an embodiment illustrated on FIGs. 9a and 9b, the optical element 101 is rigidly attached to the transparent portion of the body 110 of the detachable optical structure element. The transparent portion this and other embodiments may cover the whole body 110 as shown in the figure, or at least part of the body to allow light to fall into the second aperture 122 of the optical element 101. FIG. 9a shows the detachable optical structure detached from the device 120, and FIG. 9b shows the detachable optical structure applied to the device 120. The detachable optical structure according to the embodiment is designed in a way that the position of the optical element 101 on the body 110 is permanent and aligns with a camera of one or more specific device types when the detachable optical structure is applied to such device 120. This helps avoid alignment errors caused by accidental movement of the optical element 101.

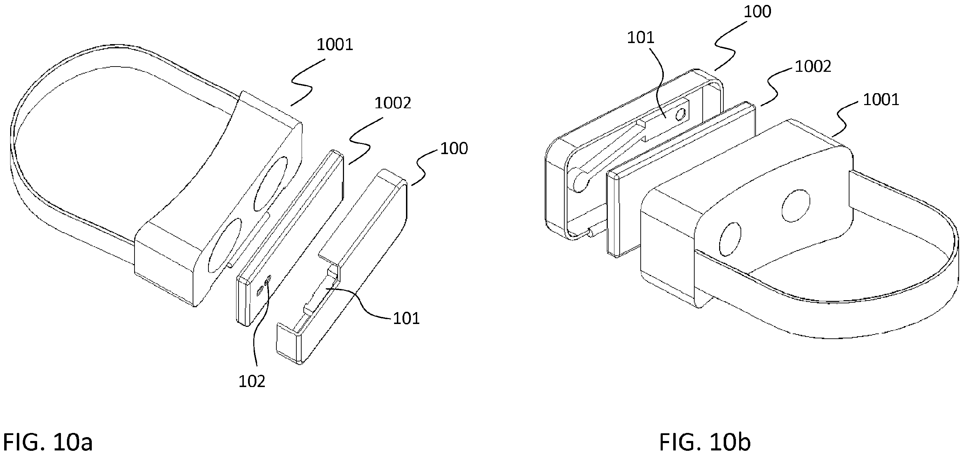

According to an embodiment illustrated on FIGs. 10a-10b, a virtual and/or augmented reality headset 1001 comprises the detachable optical structure 100 according to any of the embodiments. The virtual and/or augmented reality headset 1001 also comprises a slot (not illustrated and can be any type of a slot or fastening mechanism) for a mobile device 1002 having two or more cameras, wherein the detachable optical structure 100 is aligned with the slot such that, when the mobile device 1002 having two or more cameras is inserted in the slot, the optical element 101 is aligned with one of the cameras 102 of the mobile device 1002 having two or more cameras. In an embodiment, the detachable optical structure 100 can be implemented in a cover for a virtual/augmented reality headset 1001, as shown in FIGs. 10a-10b.

The embodiments above allow using the detachable optical structure to create stereoscopic images in real time for example when a mobile phone is inserted in the slot of the virtual and/or augmented reality headset.

Proportions in the drawings may be exaggerated or altered for illustrative purposes, and should not be interpreted as the only accurate visual representation of the structures and devices shown. Any range or device value given herein may be extended or altered without losing the effect sought. Also any embodiment may be combined with another embodiment unless explicitly disallowed.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item may refer to one or more of those items. The term 'and/or' may be used to indicate that one or more of the cases it connects may occur. Both, or more, connected cases may occur, or only either one of the connected cases may occur. Aspects of any of the embodiments described above may be combined with aspects of any of the other embodiments described to form further embodiments without losing the effect sought.

The term 'comprising' is used herein to mean including the elements, structures or modules identified, but that such elements, structures or modules do not comprise an exclusive list and a method or apparatus may contain additional elements, structures or modules.

It will be understood that the above description is given by way of example only and that various modifications may be made by those skilled in the art. The above specification, embodiments and data provide a complete description of the structure and use of exemplary embodiments.

## Claims

1. A detachable optical structure (100) for a device (120) having one or more cameras (102), the detachable optical structure (100) comprising:
a body (110) having a transparent portion (610),
an optical element (101, 201, 401, 501) attached to the body (110), wherein
the optical element (101, 201, 401, 501) comprises a first aperture (121, 421), a second aperture (122, 422) and two or more reflective elements (111, 411;112, 412) arranged for parallel displacement of an optical axis from the first aperture (121, 421) to the second aperture (122, 422), and
when the detachable optical structure (100) is applied to the device (120) having one or more cameras (102), the optical element (101, 201, 401, 501) is configured to be positioned such that the first aperture (121, 421) is aligned with a camera of the device (120) having one or more cameras (102), and the optical element (101, 201, 401, 501) is at least partially aligned with the transparent portion (610) of the body (110) to allow for light to travel through the second aperture (122),
wherein the optical element (101, 201, 401, 501) is movably attached to the body (110) via a shifting mechanism,
wherein the shifting mechanism comprises a rotating disc (602) attached to the body (110) via a pivoting joint (603), two or more arms (604) attached to the rotating disc (602) via two or more sliding joints, and two or more pivoted joints (605) connecting each of the two or more arms (604) with the optical element (101, 201, 401, 501); or
wherein the shifting mechanism comprises a plurality of mechanical arms (702) attached to each other in a sequence at each end via floating pivots (730), wherein the first mechanical arm (702') of the plurality of mechanical arms (702) is attached at a first end to the body (110) via an anchored pivot (713), and the last mechanical arm of the plurality of mechanical arms (702) is attached to the optical element (101, 201, 401, 501) via a floating pivot (703); **or**
wherein the shifting mechanism comprises a ferritic plate (801) rigidly attached to the body (110), a magnetic element (802) rigidly attached to the optical element (101, 201, 401, 501) and movably attached to the ferritic plate (801) due to the magnetic attraction between the magnetic element (802) and ferritic plate (801).

2. The detachable optical structure of claim 1, wherein the first aperture (121, 421) and the second aperture (122, 422) of the optical element (101, 201, 401, 501) are parallel to each other and brought apart in space, and wherein the two or more reflective elements are aligned with each other and with the first aperture (121, 421) and the second aperture (122, 422) such that light traveling through the second aperture (122, 422) reflects off the two or more reflective elements and travels through the first aperture (121, 421).

3. The detachable optical structure of claim 2, wherein the first aperture (121, 421) and the second aperture (122, 422) are parallel to each other and brought apart in space by a distance between 30 and 80 mm, allowing parallel displacement of the optical axis from the first aperture (121, 421) to the second aperture (122, 422) by the distance between 30 and 80 mm.

4. The detachable optical structure of any one of claims 1-3, wherein the optical element (401) has a telescopic structure, and the first aperture (421), the second aperture (422) and the two or more reflective elements (411, 412) are arranged to be movable in relation to each other such that the length of the parallel displacement of the optical axis from the first aperture to the second aperture (422) can be adjusted.

5. The detachable optical structure of claim 4, wherein the reflective elements (411, 412) have a convex or concave shape.

6. The detachable optical structure of any one of claims 1-4, wherein the optical element (101, 201, 401, 501) is rigidly attached to the transparent portion (610) of the body (110) of the detachable optical structure (100).

7. A mobile phone comprising one or more cameras and the detachable optical structure according to any one of claims 1-6.

8. A cover for a device having one or more cameras, comprising the detachable optical structure according to any one of claims 1-6.

9. A virtual and/or augmented reality headset (1001) comprising the detachable optical structure (100) according to any one of claims 1-6.

## Patentansprüche

1. Abnehmbare optische Struktur (100) für eine Einrichtung (120), die eine oder mehrere Kameras (102) aufweist, wobei die abnehmbare optische Struktur (100) umfasst:
einen Körper (110), der einen transparenten Abschnitt (610) aufweist,
ein optisches Element (101, 201, 401, 501), angebracht an dem Körper (110), wobei das optische Element (101, 201, 401, 501) eine erste Apertur (121, 421), eine zweite Apertur (122, 422) und zwei oder mehr reflektierende Elemente (111, 411;112, 412) umfasst, eingerichtet zur parallelen Versetzung einer optischen Achse von der ersten Apertur (121, 421) zu der zweiten Apertur (122, 422), und
wenn die abnehmbare optische Struktur (100) auf die Einrichtung (120), die eine oder mehrere Kameras (102) aufweist, angewandt wird, das optische Element (101, 201, 401, 501) dafür ausgelegt ist, so positioniert zu werden, dass die erste Apertur (121, 421) mit einer Kamera der Einrichtung (120), die eine oder mehrere Kameras (102) aufweist, ausgerichtet ist, und das optische Element (101, 201, 401, 501) zumindest teilweise mit dem transparenten Abschnitt (610) des Körpers (110) ausgerichtet ist, um es Licht zu ermöglichen, durch die zweite Apertur (122) zu gelangen,
wobei das optische Element (101, 201, 401, 501) über einen Schiebemechanismus bewegbar an dem Körper (110) angebracht ist,
wobei der Schiebemechanismus eine rotierende Scheibe (602) umfasst, über ein schwenkbares Gelenk (603) an dem Körper (110) angebracht, zwei oder mehrere Arme (604), über zwei oder mehrere gleitende Gelenke an der rotierenden Scheibe (602) angebracht, und zwei oder mehrere schwenkbare Gelenke (605), die jeden der zwei oder mehreren Arme (604) mit dem optischen Element (101, 201, 401, 501) verbinden; **oder**
wobei der Schiebemechanismus eine Mehrzahl von mechanischen Armen (702) umfasst, sequenziell an jedem Ende über wandernde Drehpunkte (730) aneinander angebracht, wobei der erste mechanische Arm (702') der Mehrzahl von mechanischen Armen (702) an einem ersten Ende an dem Körper (110) über einen verankerten Drehpunkt (713) angebracht ist und der letzte mechanische Arm der Mehrzahl von mechanischen Armen (702) über einen wandernden Drehpunkt (703) an dem optischen Element (101, 201, 401, 501) angebracht ist; **oder**
wobei der Schiebemechanismus eine ferritische Platte (801) umfasst, fest an dem Körper (110) angebracht, ein magnetisches Element (802), fest an dem optischen Element (101, 201, 401, 501) angebracht und wegen der magnetischen Anziehung zwischen dem magnetischen Element (802) und der ferritischen Platte (801) bewegbar an der ferritischen Platte (801) angebracht.

2. Abnehmbare optische Struktur nach Anspruch 1, wobei die erste Apertur (121, 421) und die zweite Apertur (122, 422) des optischen Elements (101, 201, 401, 501) parallel zueinander und räumlich getrennt sind und wobei die zwei oder mehr reflektierenden Elemente miteinander und mit der ersten Apertur (121, 421) und der zweiten Apertur (122, 422) ausgerichtet sind, sodass Licht, das durch die zweite Apertur (122, 422) gelangt, von den zwei oder mehreren reflektierenden Elementen reflektiert wird und durch die erste Apertur (121, 421) gelangt.

3. Abnehmbare optische Struktur nach Anspruch 2, wobei die erste Apertur (121, 421) und die zweite Apertur (122, 422) parallel zueinander und räumlich durch eine Distanz zwischen 30 mm und 80 mm getrennt sind, sodass durch die Distanz zwischen 30 mm und 80 mm eine parallele Versetzung der optischen Achse von der ersten Apertur (121, 421) zu der zweiten Apertur (122, 422) ermöglicht wird.

4. Abnehmbare optische Struktur nach einem der Ansprüche 1 bis 3, wobei das optische Element (401) eine teleskopische Struktur aufweist und die erste Apertur (421), die zweite Apertur (422) und die zwei oder mehreren reflektierenden Elemente (411, 412) eingerichtet sind, um in Bezug aufeinander bewegbar zu sein, sodass die Länge der parallelen Versetzung der optischen Achse von der ersten Apertur zu der zweiten Apertur (422) eingestellt werden kann.

5. Abnehmbare optische Struktur nach Anspruch 4, wobei die reflektierenden Elemente (411, 412) eine konvexe oder konkave Form aufweisen.

6. Abnehmbare optische Struktur nach einem der Ansprüche 1 bis 4, wobei das optische Element (101, 201, 401, 501) fest an dem transparenten Abschnitt (610) des Körpers (110) der abnehmbaren optischen Struktur (100) angebracht ist.

7. Mobiltelefon, umfassend eine oder mehrere Kameras und die abnehmbare optische Struktur nach einem der Ansprüche 1 bis 6.

8. Abdeckung für eine Einrichtung, aufweisend eine oder mehrere Kameras, umfassend die abnehmbare optische Struktur nach einem der Ansprüche 1 bis 6.

9. Headset (1001) für virtuelle und/oder erweiterte Realität ("Augmented Reality"), umfassend die abnehmbare optische Struktur (100) nach einem der Ansprüche 1 bis 6.

## Revendications

1. Structure optique amovible (100) pour un dispositif (120) pourvu d'une ou de plusieurs caméras (102), la structure optique amovible (100) comprenant :
un corps (110) pourvu d'une partie transparente (610),
un élément optique (101, 201, 401, 501) attaché au corps (110),
l'élément optique (101, 201, 401, 501) comprenant une première ouverture (121, 421), une deuxième ouverture (122, 422) et au moins deux éléments réfléchissants (111, 411 ; 112, 412) agencés pour réaliser un décalage parallèle d'un axe optique de la première ouverture (121, 421) à la deuxième ouverture (122, 422), et
lorsque la structure optique amovible (100) est appliquée sur le dispositif (120) pourvu d'une ou de plusieurs caméras (102), l'élément optique (101, 201, 401, 501) étant configuré pour être positionné de telle manière que la première ouverture (121, 421) soit alignée avec une caméra du dispositif (120) pourvu d'une ou de plusieurs caméras (102), et que l'élément optique (101, 201, 401, 501) soit au moins partiellement aligné avec la partie transparente (610) du corps (110) pour laisser passer de la lumière à travers la deuxième ouverture (122),
l'élément optique (101, 201, 401, 501) étant attaché mobile au corps (110) par le biais d'un mécanisme de déplacement,
le mécanisme de déplacement comprenant un disque rotatif (602) attaché au corps (110) par le biais d'une articulation à pivot (603), au moins deux bras (604) attachés au disque rotatif (602) par le biais d'au moins deux articulations coulissantes, et au moins deux articulations pivotantes (605) reliant chacun des au moins deux bras (604) à l'élément optique (101, 201, 401, 501) ; **ou**
le mécanisme de déplacement comprenant une pluralité de bras mécaniques (702) attachés successivement les uns aux autres à chaque extrémité par le biais de pivots flottants (730), le premier bras mécanique (702') de la pluralité de bras mécaniques (702) étant attaché à une première extrémité au corps (110) par le biais d'un pivot ancré (713), et le dernier bras mécanique de la pluralité de bras mécaniques (702) étant attaché à l'élément optique (101, 201, 401, 501) par le biais d'un pivot flottant (703) ; **ou**
le mécanisme de déplacement comprenant une plaque de ferrite (801) solidarisée au corps (110), un élément magnétique (802) solidarisé à l'élément optique (101, 201, 401, 501) et attaché mobile à la plaque de ferrite (801) du fait de l'attraction magnétique entre l'élément magnétique (802) et la plaque de ferrite (801).

2. Structure optique amovible selon la revendication 1, dans laquelle la première ouverture (121, 421) et la deuxième ouverture (122, 422) de l'élément optique (101, 201, 401, 501) sont parallèles entre elles et espacées entre elles, et dans laquelle les au moins deux éléments réfléchissants sont alignés entre eux et avec la première ouverture (121, 421) et la deuxième ouverture (122, 422) de telle manière que la lumière passant à travers la deuxième ouverture (122, 422) soit réfléchie par les au moins deux éléments réfléchissants et passe à travers la première ouverture (121, 421).

3. Structure optique amovible selon la revendication 2, dans laquelle la première ouverture (121, 421) et la deuxième ouverture (122, 422) sont parallèles entre elles et espacées entre elles d'une distance comprise entre 30 et 80 mm, pour permettre un décalage parallèle de l'axe optique de la première ouverture (121, 421) à la deuxième ouverture (122, 422) de la distance comprise entre 30 et 80 mm.

4. Structure optique amovible selon l'une quelconque des revendications 1 à 3, dans laquelle l'élément optique (401) est pourvu d'une structure télescopique, et la première ouverture (421), la deuxième ouverture (422) et les au moins deux éléments réfléchissants (411, 412) sont agencés de sorte à être mobiles entre eux de manière à permettre le réglage de la longueur du décalage parallèle de l'axe optique de la première ouverture à la deuxième ouverture (422).

5. Structure optique amovible selon la revendication 4, dans laquelle les éléments réfléchissants (411, 412) sont pourvus d'une forme convexe ou concave.

6. Structure optique amovible selon l'une quelconque des revendications 1 à 4, dans laquelle l'élément optique (101, 201, 401, 501) est solidarisé à la partie transparente (610) du corps (110) de la structure optique amovible (100).

7. Téléphone mobile comprenant une ou plusieurs caméras et la structure optique amovible selon l'une quelconque des revendications 1 à 6.

8. Couvercle pour un dispositif pourvu d'une ou de plusieurs caméras, comprenant la structure optique amovible selon l'une quelconque des revendications 1 à 6.

9. Casque de réalité virtuelle et/ou augmentée (1001) comprenant la structure optique amovible (100) selon l'une quelconque des revendications 1 à 6.
